# FASCICULE DE BREVET EUROPEEN

(11) **EP 0 611 202 B1**
(45) Date de publication et mention de la délivrance du brevet: **14.04.1999**
(21) Numéro de dépôt: 94400266.6
(22) Date de dépôt: 08.02.1994
(51) Int. Cl.: G11B 11/10, G11B 5/49

(54) **Tête de lecture magnéto-optique et appareil de lecture d'enregistrements magnétiques multipistes**
Magnetooptischer Wiedergabekopf und Wiedergabegerät für die Wiedergabe von magnetischen Daten auf mehreren Spuren
Magnetooptical reproducing head and apparatus for reproducing magnetically recorded data from multiple tracks

(30) Priorité: 09.02.1993 FR 9301407
(43) Date de publication de la demande: 17.08.1994
(60) Demande divisionnaire: 97119267.9
(73) Titulaire: THOMSON-CSF, 75008 Paris (FR)
(72) Inventeur: Lehureau, Jean-Claude, F-92402 Courbevoie Cedex (FR)
(74) Mandataire: Guérin, Michel

(56) Documents cités:
- EP-A- 0 019 378
- EP-A- 0 436 424
- EP-A- 0 527 670
- US-A- 3 769 465
- US-A- 4 550 249
- THIRTY -SEVENTH ANNUAL CONFERENCE ON MAGNETISM AND MAGNETIC MATERIALS, HOUSTON, TEXAS, US, 1-4 DECEMBER 1992, vol.73, no.10 pages 6238 - 6240 LETEXIER ET AL. 'Longitudinal Kerr effect enchancement of a 384 track head for high data rate readout'
- DIGESTS OF INTERMAG '92 INTERNATIONAL MAGNETICS CONFERENCE,IEEE, 13 Avril 1992, ST.LOUIS,MISSOURI pages DP9 - DP10, XP000341885 MAILLOT ET AL. 'THE KERR HEAD: A MULTITRACK FIXED ACTIVE HEAD' & IEEE TRANSACTIONS ON MAGNETICS, vol.28, no.5, Septembre 1992, NEW YORK US pages 2656 - 2658
- SUPERCOM/INTERNATIONAL CONFERENCE ON COMMUNICATIONS '92, vol.1, 14 Juin 1992 pages 110 - 114, XP326860 COLINEAU ET AL. 'DIGITAL SIGNAL PROCESSING FOR A HIGH DENSITY MULTITRACK TAPE RECORDER'

## Description

L'invention concerne la lecture optique sur un support d'enregistrement magnétique.

Le principe général de l'effet magnéto-optique (effet Kerr ou Faraday) est le suivant : une couche mince de matériau magnétique approprié, éclairée par un faisceau lumineux, modifie les propriétés de ce faisceau d'une manière qui dépend de la polarisation magnétique de la couche.

Par conséquent, l'écriture d'informations sur une bande magnétique est une écriture magnétique, mais la lecture est optique.

La modification du faisceau lumineux peut être de nature diverse : modification du coefficient de réflexion, introduction d'un retard variable de phase optique, ou encore variation du plan de polarisation d'une lumière polarisée. C'est ce dernier phénomène qui est le plus facile à utiliser.

La lecture magnéto-optique permet de lire des informations magnétiques inscrites dans des régions très petites. On devrait donc pouvoir inscrire sur une bande magnétique une très grande densité d'informations, sous forme numérique, chaque petite région définissant un bit d'information. Et en particulier on devrait pouvoir inscrire des pistes parallèles comportant chacune une succession d'informations numériques.

En pratique cependant il n'est pas facile de lire directement par un faisceau optique les informations inscrites sur une bande magnétique. On utilise un transducteur magnéto-optique, qui constitue la tête de lecture devant laquelle défile la bande magnétique. Ce transducteur comporte une couche magnétique mince pouvant donner lieu à un effet magnéto-optique. La bande qui porte des informations magnétiques défile à proximité immédiate de la tête et induit des modifications de flux dans la couche mince. C'est sur cette couche mince et non pas sur la bande qu'est dirigé un faisceau laser de lecture. Des tentatives ont été faites dans ce sens pour essayer de lire des bandes de magnétoscope comportant des pistes enregistrées obliquement par rapport à l'axe de défilement de la bande (c'est l'enregistrement vidéo classique sur bande magnétique); chaque piste représente une ligne de balayage de télévision et les informations enregistrées sur cette piste représentent le signal de luminance ou chrominance pour cette ligne. Les pistes obliques ont une longueur limitée (largeur de la bande dans la direction oblique de la piste) et elles doivent être lues successivement au fur et à mesure qu'elles défilent devant la tête. La résolution de lecture est la résolution optique du faisceau d'éclairage et des moyens de lecture de la modulation du faisceau de retour.

Une autre voie de recherche a été ouverte avec des tentatives pour inscrire et lire sur la bande magnétique des pistes parallèles à la direction de défilement de la bande, ceci étant rendu possible par l'invention de têtes magnéto-optiques à couches minces et à entrefer linéaire localisé, comme par exemple celles décrites dans la demande de brevet EP 0436 424. Si la bande passe devant un entrefer de circuit magnétique, elle engendre dans le circuit un flux qui dépend de la polarisation magnétique locale de la bande, et ce flux est dirigé vers la couche mince magnéto-optique qui sera éclairée par un faisceau lumineux. La résolution de la lecture dans le sens de défilement de la bande est définie par la largeur de l'entrefer, qui est l'épaisseur d'une couche mince, donc typiquement quelques centaines ou milliers d'angströms. Cette résolution est bien meilleure que la résolution optique. Dans le sens transversal à l'entrefer, la résolution est limitée par l'optique.

Pour lire une bande comportant des pistes parallèles avec ce type de tête, on a donc proposé de réaliser alors l'entrefer de la tête sous forme d'une ligne très étroite, parallèle au plan de la bande et perpendiculaire à la direction de défilement de la bande. Les couches de circuits magnétiques du transducteur sont gravées en fonction du motif de pistes à lire, c'est-à-dire qu'on délimite des zones de circuits magnétiques séparés les uns des autres et écartés de telle façon que chaque circuit magnétique élémentaire ainsi délimité (et terminé par une petite portion de la ligne commune d'entrefer) reste toujours placé en face de la piste qu'il doit lire. Toutes les pistes sont parallèles à la direction de défilement de la bande. Chaque zone élémentaire de couche magnéto-optique gravée est éclairée par un faisceau laser ou une portion de faisceau laser respective, et le signal renvoyé par chaque zone est détecté séparément, par exemple par les différents pixels d'une barrette de capteurs photosensibles à transfert de charge recevant le faisceau lumineux modulé par les portions de couche magnéto-optique. Chaque pixel correspond alors à une piste, et reçoit successivement les informations inscrites sur cette piste; on peut donc lire simultanément par une barrette linéaire de capteurs les différentes successions d'informations correspondant aux différentes pistes.

L'invention concerne les têtes de lecture en couches minces à entrefer linéaire étroit, et elle a pour but de rendre plus facile la lecture multipiste lorsque les pistes magnétiques sont très étroites et très proches les unes des autres et risquent donc d'une part d'engendrer de la diaphonie entre pistes et d'autre part de se décaler par rapport à la tête de lecture au cours du défilement de la bande. L'invention concerne aussi un appareil de lecture d'enregistrements magnétiques, pourvu de moyens de rattrapage des fluctuations du support d'enregistrement devant une tête de lecture magnéto-optique à entrefer linéaire étroit.

Selon un premier aspect, l'invention s'intéresse d'abord uniquement aux têtes magnétiques destinées à lire des informations enregistrées sur une bande magnétique sous forme de pistes parallèles disposées les unes par rapport aux autres avec un pas inférieur à 15 micromètres environ, et pour lesquelles le problème de l'alignement entre les pistes à lire et les circuits magnétiques qui les lisent devient particulièrement crucial.

On a déjà proposé que pour ces têtes la couche magnéto-optique soit continue le long d'un entrefer linéaire de la tête, sur une largeur correspondant à un grand nombre de pistes (de préférence sur toute la largeur de la bande à lire), et qu'elle soit éclairée par un faisceau lumineux concentré sur une ligne parallèle à cet entrefer et à proximité immédiate de cet entrefer. <- > Ceci est divulgué dans les documents DIGEST OF INTERMAG '92 IEEE 13 Avril 1992, ST LOUIS, MISSOURI, pages DP9-DP10 XP 000341885, MAILLOT et Al. "The Kerr Head : a Multitrack fixed active head", et IEEE Transactions of Magnetics, vol. 28, n°5, Sept. 92, NEW-YORK, US, pages 2656-2658.

Dans l'appareil de lecture, la tête sera disposée de telle manière que la direction de l'entrefer linéaire soit transversale par rapport à la direction des pistes, et transversale à la direction de défilement du support d'enregistrement (bande magnétique ou autre). L'entrefer linéaire est par ailleurs parallèle au plan du support d'enregistrement.

Dans la suite, le mot "transversal" sera utilisé de manière générale pour dire soit perpendiculaire, soit oblique. L'oblicité de l'entrefer par rapport aux pistes à lire est par exemple souhaitable lorsque les informations magnétiques sont enregistrées "avec azimuth", c'est-à-dire avec un angle oblique entre la polarisation magnétique et la direction de la piste.

Les pistes d'enregistrement seront en général parallèles au sens de défilement du support d'enregistrement, mais on verra que la tête selon l'invention présente l'avantage de permettre la réalisation d'un appareil de lecture capable aussi de lire des bandes magnétiques dont les pistes s'étendent obliquement par rapport à cette direction; dans ce cas, la tête est disposée de telle manière que l'entrefer linéaire soit transversal à la fois par rapport à la direction de défilement et par rapport à la direction des pistes.

Bien qu'on ait considéré jusqu'à maintenant que les têtes de lecture magnéto-optique multipistes destinées à lire des pistes qui défilent simultanément devant l'entrefer devaient fonctionner avec une gravure de la couche magnéto-optique et même des différentes couches constituant les circuits magnétiques, faute de quoi la discrimination de pistes très rapprochées, parallèles à la direction de défilement de la bande, était impossible, il est apparu cependant que non seulement cette gravure n'était pas nécessaire, mais que de plus l'absence de gravure pouvait faciliter la lecture de ces pistes.

Il faut bien comprendre que, par son principe même, la lecture magnéto-optique effectuée de manière indirecte à travers un transducteur, tend à faire perdre la possibilité de discriminer les unes par rapport aux autres des pistes définissant des informations différentes. Le transducteur tend en effet à créer de la diaphonie entre ces pistes, diaphonie qui n'existerait pratiquement pas dans le cas d'une lecture directe sur la bande. La gravure des couches magnétiques, lorsqu'elle était possible, ou l'éloignement mutuel des pistes au delà de plusieurs dizaines de micromètres les unes des autres, étaient les solutions proposées pour remédier à ce problème.

Selon l'invention, on met à profit les structures à entrefer linéaire étroit, couplées à un éclairement de la couche magnéto-optique à proximité immédiate de cet entrefer, pour supprimer une gravure de la tête qui s'avère à la fois inutile, désavantageuse d'un point de vue technologique, et désavantageuse comme on le verra en ce qui concerne le rattrapage des fluctuations latérales de la bande.

On propose donc selon l'invention une tête de lecture selon la revendication 1.

Le faisceau lumineux sera de préférence focalisé sur cette ligne par une optique appropriée, telle qu'une lentille cylindrique s'étendant sur toute la largeur de la tête, c'est-à-dire en pratique toute la largeur de la bande à lire.

La portion de couche éclairée, provoquant l'effet magnéto-optique, est donc très proche de l'entrefer linéaire étroit; le flux magnétique engendré dans une portion de couche magnéto-optique sous l'effet de l'information magnétique enregistrée dans la bande à proximité immédiate de cette portion, reste indépendant des flux magnétiques qui circulent dans d'autres portions de couche magnéto-optiques voisines et qui correspondent à d'autres informations enregistrées, et ceci malgré l'extrême proximité des pistes magnétiques. Ceci ne serait pas vrai si l'éclairement de la couche n'était pas fait à proximité immédiate de l'entrefer, les lignes de flux magnétiques se dispersant dans la couche au fur et à mesure qu'on s'éloigne de l'entrefer puisque le circuit magnétique non gravé est commun à toutes les pistes; de plus, même si une certaine diaphonie subsiste entre pistes adjacentes, on sait corriger cette diaphonie.

Pour limiter au maximum la diaphonie entre pistes que tendrait à créer tout naturellement une couche magnéto-optique continue, on prévoit que la couche est magnétiquement anisotrope et a son axe de magnétisation difficile transversal (de préférence perpendiculaire) à la direction de l'entrefer linéaire, dans le plan de la couche. L'axe facile est au contraire parallèle à l'entrefer. La perméabilité magnétique est plus forte selon l'axe difficile que selon l'axe facile, d'où l'étalement de la zone de magnétisation dans une direction perpendiculaire à l'entrefer, ce qui limite la diaphonie entre pistes.

L'invention est applicable aussi bien dans le cas de têtes de lecture planaires que non planaires. Dans la technique planaire, les couches magnétiques et non-magnétiques qui forment le circuit magnétique commun à entrefer linéaire étroit sont déposées en couches minces sur une face plane parallèle à la surface contre laquelle défilera la bande magnétique. Dans la technique non planaire, les couches magnétiques et non-magnétiques sont déposées en couches minces dans un plan transversal au plan de la bande ; celle-ci défile contre la tranche des couches, obliquement ou perpendiculairement par rapport à la surface principale sur laquelle ont été déposées les couches magnétiques.

L'invention est plus généralement applicable dès lors que la technologie permet de faire arriver une couche mince magnéto-optique jusqu'à un entrefer étroit linéaire dont la direction d'allongement est parallèle au plan de la bande et transversale à la direction de défilement de la bande. Dans un cas limite même, l'invention s'applique lorsque le circuit magnétique de la tête ne comprend qu'une seule couche mince magnéto-optique dont la tranche s'étend selon une ligne contre laquelle défile la bande; cette structure est possible lorsque les informations enregistrées sur la bande sont des polarisations magnétiques orientées perpendiculairement au plan de la bande; dans ce cas, l'entrefer linéaire étroit est constitué entre l'extrémité linéaire de la couche magnéto-optique et la bande magnétique elle-même.

L'invention concerne aussi un appareil de lecture optique selon la revendication 6.

Le faisceau de retour modulé par la couche magnéto-optique continue est focalisé de préférence sur un détecteur linéaire photosensible qui peut être une barrette photosensible. On peut donc dire qu'une image de la modulation de polarisation magnétique tout le long de la couche magnéto-optique est projetée sur le détecteur photosensible. C'est donc également une image des informations magnétiques portées par la bande et situées sous l'entrefer linéaire à un instant donné qui est projetée sur le détecteur photosensible. Le détecteur linéaire voit donc à chaque instant une image des pistes d'informations parallèles. La longueur des pistes s'étend en effet dans une direction transversale par rapport à l'entrefer étroit.

Si les pistes de la bande sont parallèles à la direction de défilement (cas général) on peut affecter à chaque piste un ou plusieurs capteurs respectifs.

On prévoit de préférence que des moyens sont prévus pour décaler la position relative de l'image des pistes transmise par le faisceau modulé par rapport au détecteur, de manière qu'une portion de faisceau modulé par des informations d'une piste respective de la bande tombe sur le ou les capteurs élémentaires correspondant à cette piste. Ces moyens peuvent être mécaniques ou électriques; ils agissent sur la position de la barrette par rapport à la tête ou sur la position du faisceau par rapport à la barrette, mais pas sur la position de la tête par rapport à la bande ; par exemple le faisceau peut être dévié ou déformé par un miroir ou une lame à faces parallèles dont la rotation est commandée électriquement. Ou bien la position de la barrette est modifiée par un moteur.

La déviation du faisceau peut être effectuée automatiquement à partir des signaux lus par la barrette de capteurs, soit en se référant à une ou plusieurs pistes de référence, soit même à partir d'une corrélation entre les signaux enregistrés sur des pistes adjacentes, cette corrélation pouvant montrer s'il y a une diaphonie stable ou croissante entre voies. Il est souhaitable dans ce cas que le capteur photosensible ait au moins deux pixels par piste.

Selon l'invention, la même tête de lecture peut lire des bandes magnétiques ayant un certain pas de pistes et des bandes ayant un pas de pistes tout-à-fait différent, ce qui était impossible dans l'art antérieur. Il suffit que le capteur ait un nombre de pixels minimal correspondant à ce qui est nécessaire pour le pas le plus faible.

Si le détecteur est une barrette linéaire de pixels photosensibles, on comprend donc que ces moyens de déplacement consistent en des moyens de déflexion globale ajustable du faisceau modulé et/ou de déplacement ajustable de la barrette, dans les deux cas sans déplacement transversal du transducteur.

Cet appareil de lecture est évidemment particulièrement intéressant dans le cas où les pistes sont espacées de moins de 10 à 15 micromètres les unes des autres.

L'appareil est également particulièrement intéressant lorsque les pistes du support d'enregistrement s'étendent parallèlement à la direction de défilement, mais une particularité de l'invention est que cette condition n'est plus obligatoire : l'appareil peut lire des pistes obliques qui défilent simultanément sous l'entrefer, l'entrefer étant transversal par rapport à ces pistes (et perpendiculaire ou oblique par rapport au sens de défilement); une reconstitution des pistes est alors faite électroniquement, par traitement des signaux de sortie du détecteur pour attribuer à chaque instant à une piste déterminée les signaux issus des capteurs qui reçoivent l'image de cette piste.

Enfin, grâce à la couche continue du transducteur et aux moyens de suivi de piste, on peut maintenant lire des bandes magnétiques dont les informations sont enregistrées sur des pistes rigoureusement contiguës (sans espace de garde vide entre deux pistes adajacentes); et ceci est vrai même si les pistes adjacentes sont enregistrées sans azimuths de polarisation magnétique différents.

D'autres caractéristiques et avantages de l'invention apparaîtront à la lecture de la description détaillée qui suit et qui est faite en référence aux dessins annexés dans lesquels :
- la figure 1 représente le principe général d'un appareil de lecture magnéto-optique;
- la figure 2 représente une tête de lecture magnéto-optique;
- la figure 3 et la figure 4 représentent, en plan et en vue par la tranche respectivement, le circuit magnétique d'une tête du type de la figure 2 mais multipiste;
- la figure 5 et la figure 6 représentent en plan et en vue par la tranche respectivement, le circuit magnétique d'une tête de lecture multipiste selon l'invention;
- la figure 7 représente schématiquement l'appareil de lecture avec des moyens de déplacement d'une barrette linéaire photosensible;
- la figure 8 représente schématiquement la possibilité d'une déflexion de faisceau pour recaler la lecture des pistes;
- la figure 9 représente schématiquement le principe d'une correction optique de suivi de piste par ajustement du décalage et du grandissement du faisceau;
- les figures 10 à 14 représentent schématiquement diverses sortes de technologies de têtes magnéto-optiques dans lesquelles l'invention est applicable.

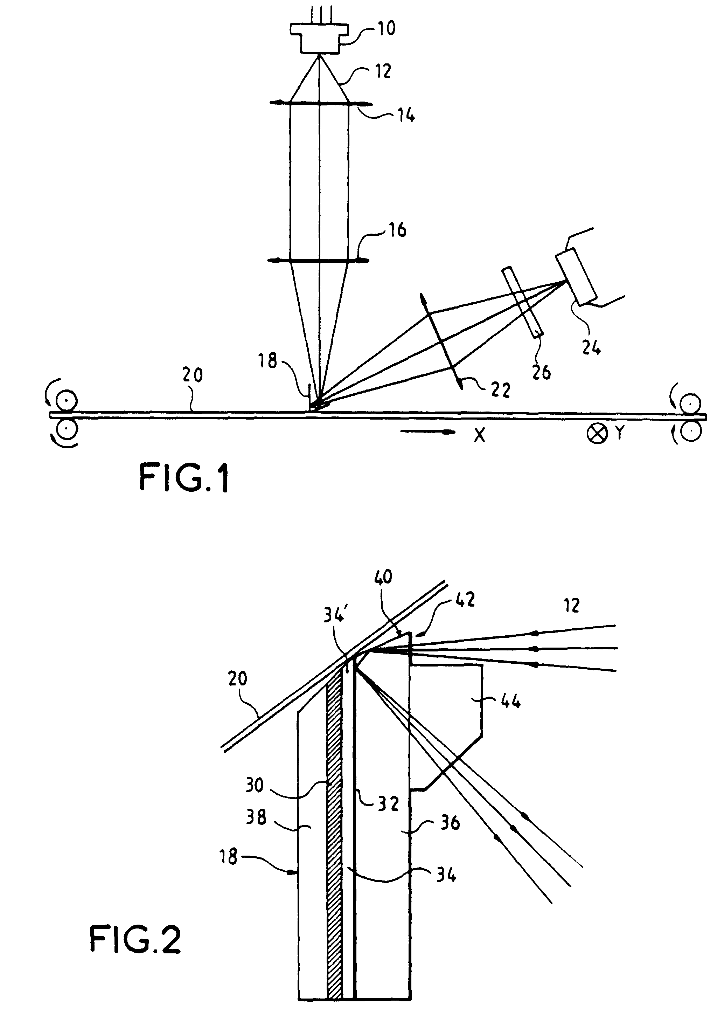

Un système de lecture magnéto-optique peut être représenté schématiquement comme à la figure 1 : une source lumineuse 10 (de préférence une diode laser à semiconducteur) émet un faisceau 12 qui est collimaté par un collimateur 14 et focalisé par une lentille 16 sur la tête de lecture 18, et en particulier sur une couche mince magnéto-optique située à proximité de la bande magnétique 20 à lire. Le faisceau est réfléchi par la couche mince (le système peut aussi fonctionner en transmission plutôt qu'en réflexion), et le plan de polarisation de la lumière réfléchie subit une rotation qui dépend de la polarisation magnétique de la couche mince. Cette polarisation magnétique dépend elle-même du sens de polarisation magnétique de la portion de bande qui est en train de passer devant la tête de lecture. Le faisceau réfléchi est focalisé par une lentille 22 sur un dispositif photosensible 24, en passant à travers un analyseur de polarisation 26. Le signal électrique fourni par le dispositif photosensible dépend de la polarisation de la lumière, donc de la polarisation magnétique de la bande à chaque instant. Le signal peut résulter de la différence entre les pixels de deux barrettes photosensibles recevant respectivement les deux composantes de polarisation du faisceau.

La figure 2 représente plus précisément la construction de la tête, dans une réalisation particulière.

La tête magnéto-optique représentée schématiquement à la figure 1 est réalisée à partir de couches magnétiques et non-magnétiques superposées, définissant un circuit magnétique dont l'entrefer très étroit (quelques angströms ou milliers d'angströms) a pour largeur l'épaisseur d'une couche non-magnétique, cet entrefer s'étendant linéairement à l'extrémité de la tête. Dans l'exemple de la figure 2, la tête comporte une couche mince magnéto-optique 32, une couche mince d'entrefer 34, et une couche 30 de fermeture de circuit magnétique, à forte perméance. Ces couches sont vues en coupe transversale. Elles sont déposées sur un substrat transparent 36. Elles peuvent être revêtues d'une couche de protection 38. Toutes ces couches se terminent à l'extrémité de la tête, devant laquelle peut défiler le support d'enregistrement (bande magnétique en principe) 20. L'entrefer 34', défini à l'extrémité de la tête en contact avec la bande 20, est constitué par la tranche de la couche non magnétique 34, là où cette couche affleure à l'extrémité de la tête. Cet entrefer 34' s'étend linéairement dans une direction générale parallèle au plan de la bande magnétique, et transversale (en principe perpendiculaire) par rapport à la direction de défilement de la bande. Le circuit magnétique constitué par les couches 30, 32, 34 se referme dans la bande magnétique 20 là où elle est en contact avec l'entrefer 34'. Le flux magnétique circule dans le circuit magnétique, et notamment dans la couche magnéto-optique 32 avec un sens lié à la polarisation magnétique locale de la bande. Le faisceau lumineux 12 éclaire la couche magnéto-optique, est réfléchi par cette couche en même temps que sa polarisation est modulée en fonction du sens du flux magnétique qui circule dans la couche. Le faisceau modulé est dirigé vers des moyens de lecture capables de détecter les variations de polarisation du faisceau. Le faisceau laser 12 est introduit dans le substrat transparent, par exemple par une face 42 parallèle au plan de la couche mince 32, il est totalement réfléchi par une face polie 40 vers la couche 32; des prismes tels que 44 peuvent être prévus pour permettre l'entrée ou la sortie du faisceau dans le substrat.

Avec ce type de structure de tête à entrefer linéaire très étroit, on peut réaliser des têtes de lecture multipistes complètement intégrées, pour lire des pistes d'informations magnétiques s'étendant parallèlement les unes aux autres le long de la direction de défilement de la bande : pour cela on réalise côte à côte, par gravure des couches magnétiques et non-magnétiques, des circuits magnétiques individuels juxtaposés comprenant chacun une portion de couche magnéto-optique 32, une portion de couche non magnétique 34 et une portion de couche de fermeture 30. Les entrefers linéaires de ces circuits magnétiques sont alignés le long d'une direction générale transversale au défilement de la bande. On peut donc lire les différentes pistes en détectant la modulation du faisceau lumineux par chacun des circuits magnétiques individuels. Les pistes peuvent être lues simultanément si on le désire, et si les moyens de lecture du faisceau modulé le permettent.

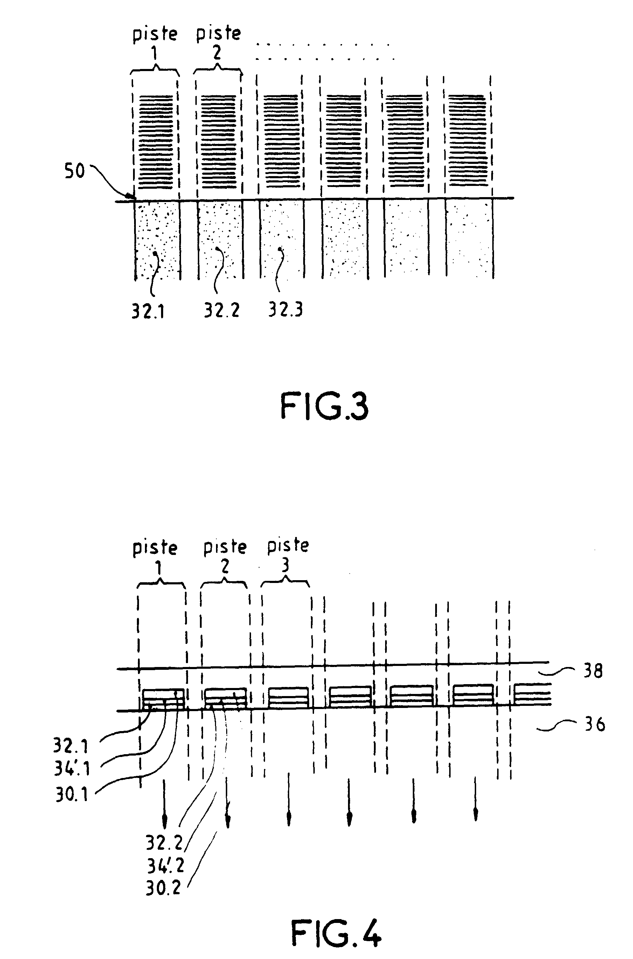

La figure 3 représente une vue dans le plan des couches, schématisant la séparation des circuits magnétiques pour lire des pistes multiples; et la figure 4 représente une vue transversale correspondante, vue par l'extrémité de la tête.

Sur la figure 3, les circuits magnétiques de la tête sont gravés de manière à former des éléments de tête respectifs, placés chacun en face d'une piste respective de la bande. La couche magnéto-optique 32 notamment est gravée pour définir des zones individuelles 32.1; 32.2, 32.3, etc. qui délimitent les circuits magnétiques individuels et qui se terminent toutes selon une ligne sur la tranche 50 de la tête. On a représenté par des traits hachurés les pistes d'informations magnétiques inscrites sur la bande 20 qui défile devant les têtes (une piste devant chaque tête) dans un plan oblique ou perpendiculaire au plan de la couche magnéto-optique.

Sur la figure 4, on voit la tranche de la tête avec les superpositions de couches gravées définissant les circuits magnétiques individuels dont les entrefers sont tous alignés : superposition 32.1, 34'.1, 30.1 pour le premier circuit, 32.2, 34'.2, 30.2 pour le deuxième, etc.. Ces couches sont déposées sur le support 36 et sont recouvertes d'une couche de protection 38. Là encore, on a représenté par des traits hachurés les pistes magnétiques qui défilent devant les têtes individuelles en quasi-contact avec la tranche de l'entrefer linéaire 34'.

La tête est donc une tête intégrée multipiste; le faisceau laser 12 éclaire l'ensemble des zones de couche magnéto-optique séparées; le faisceau modulé par chaque zone est renvoyé vers une barrette de capteurs photosensibles de telle manière qu'à un capteur corresponde une tête individuelle respective et donc une piste respective de la bande 20.

On propose de conserver, pour une tête multipiste destinée à lire des pistes très rapprochées, la structure de couches planes non gravées qui est normalement réservée à une tête monopiste ou à une tête destinée à lire des pistes suffisamment éloignées les unes des autres.

On s'est aperçu en effet que dans le cas de couches magnéto-optiques très minces, on pouvait discriminer des pistes parallèles très proches, même sans gravure de la couche magnéto-optique, en particulier lorsque le faisceau lumineux éclaire la couche magnéto-optique très près de l'entrefer linéaire situé devant le passage de la bande magnétique.

Typiquement, on propose que pour des têtes destinées à lire des pistes parallèles de pas d'espacement inférieur à 15 micromètres (de préférence inférieur à 10 voire même 5 micromètres), l'éclairement de la couche magnéto-optique par le faisceau se fasse à une distance qui est sensiblement du même ordre (moins de 10 à 15 micromètres par exemple) du bord d'entrefer contre lequel défile la bande.

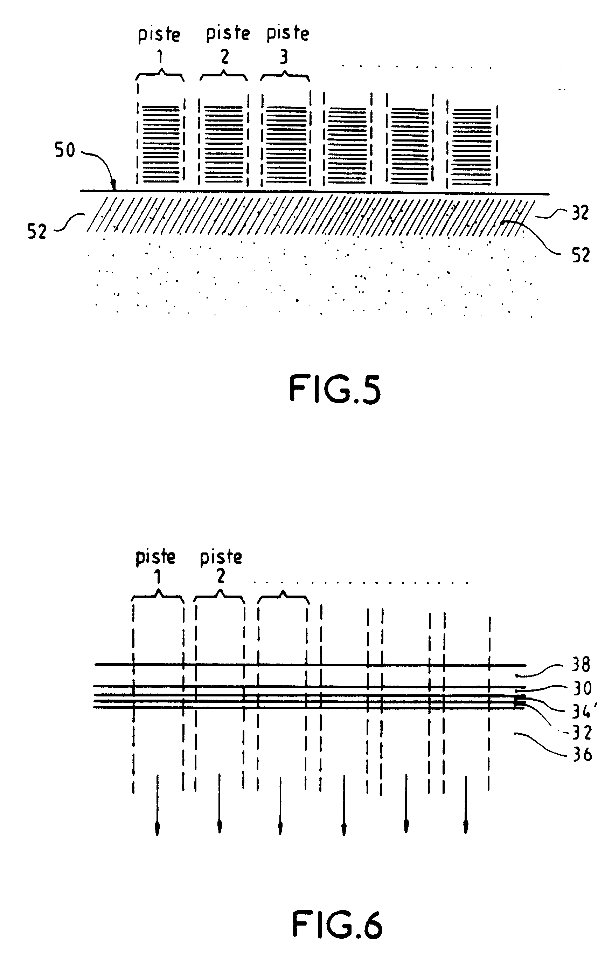

La figure 5 représente schématiquement, selon une vue analogue à celle de la figure 3, la structure de circuit magnétique continu selon l'invention. La couche 32 est continue sur toute la largeur d'exploration de la bande magnétique.

La couche magnéto-optique est suffisamment mince pour que les lignes de flux magnétique, dues à la polarisation d'une piste de la bande magnétique, restent localisées sans diaphonie trop importante avec les lignes de flux qui viendraient de pistes voisines, au moins à proximité immédiate de l'entrefer 34'. On éclaire par conséquent la couche magnéto-optique sur une zone linéaire étroite 52 très près du bord 50 de la couche, c'est-à-dire très près de l'entrefer linéaire 34' qui est en contact sur toute sa longueur avec la bande. De préférence, c'est une lentille cylindrique qui permet de concentrer le faisceau d'éclairement le long de cette ligne, par exemple sur une épaisseur de quelques micromètres et à une distance de quelques micromètres du bord 50 de la couche.

La figure 6 représente, selon une vue analogue à la figure 4, la structure de tête à couche magnéto-optique continue selon l'invention.

On s'arrangera pour donner une forte anisotropie magnétique à la couche magnéto-optique, en lui donnant un axe de magnétisation difficile dans le plan de la couche perpendiculairement à la direction de l'entrefer. La perméabilité magnétique, anisotrope, sera plus forte dans une direction s'éloignant de l'entrefer que dans une direction parallèle à l'entrefer. Le domaine de magnétisation dû aux informations inscrites sur une piste de la bande s'étendra donc plus facilement dans un sens qui s'éloigne de l'entrefer que dans un sens parallèle à l'entrefer, réduisant d'autant la diaphonie entre pistes très proches.

Il en résulte, contrairement à ce qu'on pouvait penser dans l'art antérieur, une diffusion transverse d'information suffisamment faible pour permettre de lire des pistes très étroites et très proches.

Cette anisotropie magnétique, qui est en quelque sorte une prémagnétisation de la couche magnéto-optique présente même lorsqu'il n'y a pas d'information magnétique à lire sur une bande, est réalisée soit par un champ extérieur parallèle à la direction de l'entrefer linéaire, soit par une couche ferromagnétique additionnelle induisant une anisotropie par couplage magnétique, soit encore par propriété intrinsèque de la couche magnéto-optique (déposée sous champ magnétique par exemple).

Pour donner quelques explications supplémentaires, on peut dire qu'avec une couche isotrope la magnétisation décroîtrait sensiblement d'un facteur 1/e (e = 2,7) à une distance de 1/π fois la largeur de piste. Avec une couche anisotrope, cette décroissance se produit à une distance augmentée dans le rapport des perméabilités entre l'axe difficile et l'axe facile.

La couche 32 étant continue, il n'y a pas de problème de positionnement par rapport aux pistes respectives de la bande magnétique, alors que dans l'art antérieur il fallait un positionnement exact de la tête multipiste par rapport aux pistes. Maintenant, c'est seulement la position des capteurs photosensibles par rapport à l'image des pistes de la bande magnétique qu'il faut surveiller. Cela veut dire qu'on peut recaler la lecture des pistes par une simple déflexion du faisceau de retour modulé ou par simple déplacement de la barrette photosensible par rapport à l'image transportée par le faisceau de retour : si les fluctuations transversales de la bande en mouvement décalent cette image, on agira sur la position relative du faisceau de retour modulé par rapport à la barrette de lecture, mais pas sur la position de la tête par rapport à la bande. En particulier, une corrélation entre les pixels voisins d'une barrette photosensible peut mettre en évidence un tel décalage de la lecture. On peut alors corriger la situation par déflexion du faisceau ou décalage de la barrette. La corrélation entre pixels voisins peut se faire soit à partir des signaux issus des pistes utiles, soit à partir de signaux issus de pistes de référence. On réalise ainsi un asservissement de la lecture des pistes, en fonction des signaux issus du détecteur lui-même.

Les moyens de déplacement de la barrette photosensible ou de déflexion du faisceau peuvent être divers : électromagnétiques (moteur, électroaimant) ou piézo-électriques notamment.

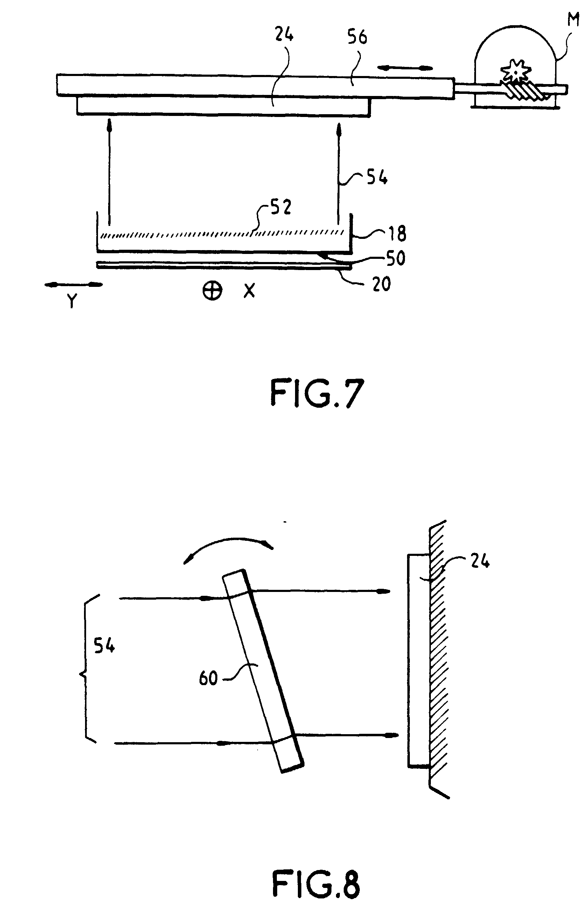

Sur la figure 7, la correction de position du faisceau est assurée par un déplacement longitudinal d'un support 56 portant la barrette 24 de capteurs photosensibles, au moyen d'un moteur M. Pour simplifier, on a représenté la tête 18 avec sa tranche 50, vue dans la direction X de défilement de la bande 20 (direction perpendiculaire au plan du papier) et, immédiatement au dessus, le faisceau laser de retour 54 modulé après réflexion sur la zone linéaire 52 de la couche 32 et dirigé sur une barrette photosensible linéaire. Cette représentation, simplifiée pour faciliter la compréhension, ne tient pas compte du fait que les trajets de faisceau peuvent être plus complexes entre la zone 52 et la barrette, et ne tient pas compte non plus des moyens optiques permettant d'une part de projeter sur la barrette une image représentant la modulation du faisceau 54 et d'autre part de séparer les composantes de polarisation du faisceau (puisque la modulation est une variation de polarisation).

Dans ces conditions, si la bande subit des fluctuations transversales dans la direction Y, c'est-à-dire dans son propre plan mais perpendiculairement à la direction de défilement, le moteur M sera commandé pour effectuer un déplacement latéral correspondant de la barrette jusqu'à replacer les pixels qui sont affectés à une piste déterminée de la bande à l'endroit où arrive la portion de faisceau effectivement modulée par cette piste. Le déplacement de la barrette se fait dans le sens de la longueur de celle-ci. Une corrélation entre les signaux issus des pixels affectés à des pistes adjacentes permet de se rendre compte d'une erreur éventuelle de position pour agir en conséquence sur le moteur.

Il y a en principe un pixel par piste à lire, mais il peut aussi y en avoir plusieurs lorsqu'une telle corrélation doit être effectuée.

Sur la figure 8, on a représenté très schématiquement un autre mode de correction de suivi de piste : la tête de lecture est fixe, la barrette photosensible est fixe par rapport à la tête, mais une lame à faces parallèles 60, orientable grâce à un moteur ou un électro-aimant non représenté, décale latéralement l'image projetée par le faisceau de retour 54, dans un sens tendant à conserver toujours sur les mêmes pixels la portion d'image correspondant à une piste donnée; ceci rétablit l'erreur due aux fluctuations transversales de la bande.

La lame parallèle pourrait aussi être une optique déformable par commande électrique (lentille ou lame associée à des moyens piézoélectriques), pour accomplir le même but. Egalement, un miroir tournant ou un miroir déformable, à commande électromagnétique ou piézoélectrique, inséré sur le trajet du faisceau de retour, peut rétablir les erreurs de positionnement des pistes.

De plus, un aspect important d'un mode de réalisation de l'invention est la possibilité de corriger des déformations de la bande, en particulier par suite de son vieillissement : une bande tend à s'allonger à force d'être utilisée; dans ce cas, les pistes tendent à se rapprocher. Une correction est possible en prévoyant une optique de grandissement ajustable sur le trajet de retour du faisceau, cette optique permettant de lire des pistes distribuées à un pas qui peut varier (au cours du temps ou d'une bande à l'autre). Cela permet aussi de lire des bandes enregistrées selon des normes différentes de pas et largeurs de pistes : une valeur de grandissement est affectée à chaque norme.

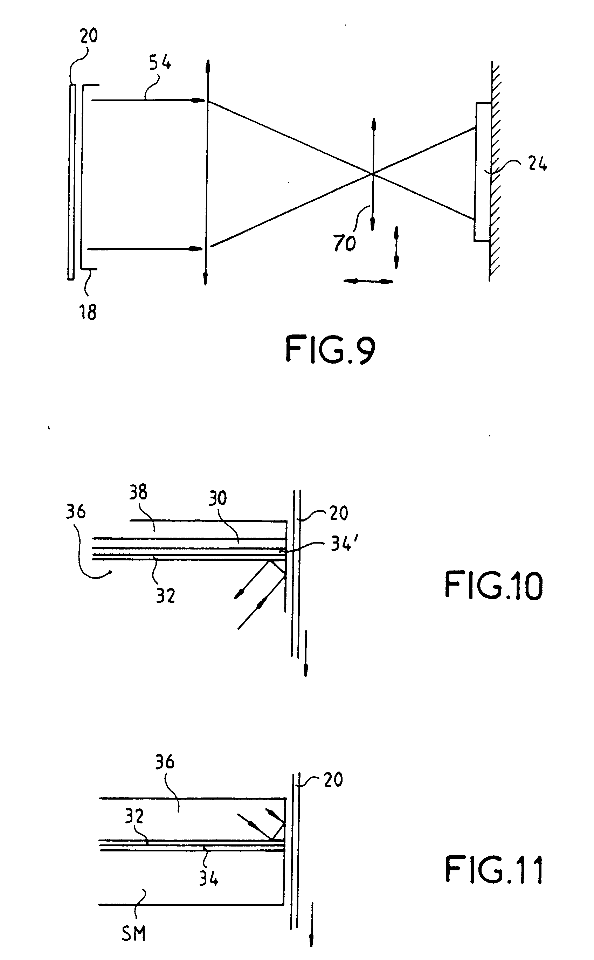

Cette possibilité est figurée schématiquement à la figure 9 par un moyen optique 70 (symbolisé par une lentille) présentant deux sens de correction possibles pour tenir compte à la fois d'un décalage latéral et d'un espacement variable des pistes par rapport aux pixels qui reçoivent le faisceau modulé par ces pistes. Bien entendu, une combinaison des moyens d'action sur le faisceau 54 décrits ci-dessus est également possible, ou une combinaison d'une action sur le faisceau et d'un déplacement des moyens optoélectroniques de lecture 24. De manière générale, l'invention permet de faire les corrections désirées (décalage latéral et/ou grandissement) par simple action sur le faisceau de retour ou par déplacement de la barrette de lecture, mais sans déplacement transversal de la tête de lecture par rapport à la bande.

De manière générale les moyens de déplacement relatif de l'image et du détecteur peuvent comporter des moyens d'asservissement pour maintenir l'image d'une piste déterminée sur les capteurs qui lui sont affectés, et ces moyens peuvent utiliser les signaux issus du détecteur linéaire lui-même.

On comprendra à la lecture de ce qui précède que ce principe original d'ajustement ou de correction automatique de suivi de piste est applicable quelle que soit la largeur et le pas de répartition des pistes. Il est lié uniquement au fait que la couche magnéto-optique est continue.

Dans ce qui précède on a considéré pour simplifier que l'entrefer étroit de la tête s'étend dans une direction perpendiculaire à la direction de défilement de la bande. Mais dans le cas d'enregistrements avec polarisation azimuthale (oblicité de la polarisation magnétique par rapport à la piste), la tête est placée avec une orientation correspondante de l'entrefer, obliquement par rapport à la direction de défilement.

De même, on a considéré que les pistes sont en général parallèles à la direction de défilement, mais elles peuvent être obliques, tout en défilant encore en parallèle sous l'entrefer. L'entrefer étroit est orienté transversalement par rapport à la direction de défilement de la bande et par rapport à la direction des pistes.

L'invention s'applique à divers types de technologies de réalisation de têtes multipistes. La description faite ci-dessus se référait à une technologie particulière, de type non planaire.

Dans les technologies non planaires, les couches magnétiques et non magnétiques sont déposées sur une surface principale qui n'est pas la face devant laquelle défile la bande. Par conséquent, ces couches s'étendent transversalement au plan de la bande. Dans les technologies planaires, les couches sont formées sur une face de la tête devant laquelle défile la bande; elles s'étendent donc essentiellement dans un plan parallèle à la bande, même si certaines portions de ces couches (et notamment la partie active magnéto-optique éclairée par le faisceau 12) sont éventuellement dans des plans obliques ou perpendiculaires à la face principale.

Sur les figures 10 à 14, on a représenté schématiquement quelques principes généraux de têtes magnéto-optiques auxquelles l'invention peut s'appliquer.

La figure 10 est un simple rappel du principe de la tête non planaire de la figure 2 : la tête comprend un substrat sur lequel sont déposées deux couches magnétiques séparées par une couche non magnétique. L'une des couches magnétiques est la couche active magnéto-optique, elle peut être directement sur le substrat (qui doit alors être transparent pour laisser passer le faisceau d'éclairage).

La figure 11 en est une variante : un substrat magnétique SM porte une couche non magnétique 34 elle-même surmontée d'une couche magnéto-optique 32; l'éclairement ne se fait pas par le substrat car il n'est normalement pas transparent aux longueurs d'onde optiques utilisées (lumière visible en principe).

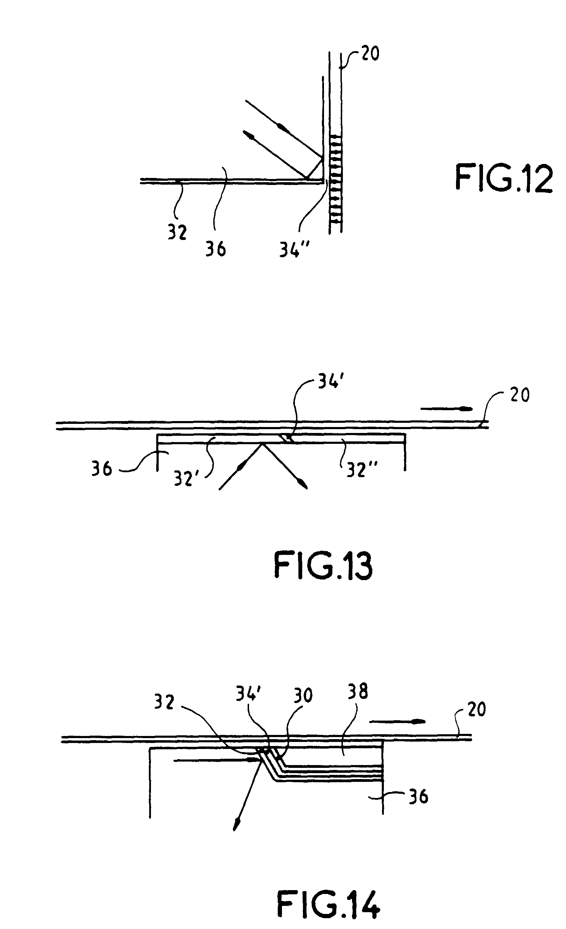

La figure 12 représente un cas particulier dans lequel le circuit magnétique est constitué par une seule couche magnéto-optique s'étendant sur un substrat non magnétique, cette couche étant transversale par rapport à la bande. L'entrefer linéaire est constitué par l'intervalle 34'' entre la tranche de la couche et la bande elle-même. Cette solution est possible lorsque la bande porte des domaines magnétiques orientés perpendiculairement au plan de la bande; car dans ce cas ils induisent dans la couche magnéto-optique une orientation magnétique correspondante sans qu'on ait besoin d'une couche de fermeture à forte perméance. L'éclairage peut se faire du côté substrat (qui doit alors être transparent) ou de l'autre côté.

La figure 13 représente une solution planaire schématique avec deux portions de couches magnétiques minces 32', 32'' (l'une au moins capable de présenter un effet magnéto-optique) déposées côte-à-côte sur une face principale de la tête (substrat transparent, l'éclairage se faisant par dessous la couche magnétooptique) et séparées par un entrefer en matériau non magnétique très étroit s'étendant linéairement sur toute la largeur de la bande à lire.

Enfin, la figure 14 représente une autre solution planaire, dans laquelle la portion de couche magnéto-optique véritablement active et qui va être éclairée par le faisceau est oblique ou même perpendiculaire à la surface principale de la tête, bien que cette couche soit formée par dépôt sur la face principale de la tête.

## Revendications

1. Tête de lecture destinée à lire sur un support d'enregistrement magnétique (20) des pistes magnétiques parallèles disposées à un pas inférieur à 15 micromètres environ, cette tête comprenant à cet effet un transducteur magnéto-optique (18) comportant une couche mince magnéto-optique (32) à proximité de laquelle peut défiler le support magnétique, et un entrefer étroit linéaire (34') adjacent à cette couche mince, de direction générale parallèle au plan du support et transversale à sa direction de défilement, la couche magnéto-optique (32) s'étendant continûment le long de l'entrefer linaire sur une largeur correspondant à un grand nombre de pistes magnétiques parallèles, et des moyens (10, 14, 16) étant prévus pour diriger un faisceau lumineux sur cette couche le long d'une ligne (52) parallèle à l'entrefer (34') et à proximité immédiate de celui-ci, caractérisée en ce que la couche magnéto-optique est magnétiquement anisotrope et présente un axe de magnétisation facile parallèlement à l'entrefer linéaire étroit.

2. Tête de lecture selon la revendication 1, caractérisée en ce que le faisceau lumineux est concentré sur la couche magnéto-optique à une distance inférieure à 10 à 15 micromètres environ du bord de la couche devant lequel peut défiler le support magnétique à lire.

3. Tête de lecture selon l'une des revendications 1 et 2, caractérisée en ce que le faisceau lumineux est focalisé sur la couche magnéto-optique par une lentille cylindrique.

4. Tête de lecture selon l'une des revendications précédentes, caractérisé en ce que la couche magnéto-optique est déposée sur une surface principale de la tête qui est parallèle au plan du support d'enregistrement lors de l'utilisation de la tête.

5. Tête de lecture selon l'une des revendications 1 à 3, caractérisée en ce que la couche magnéto-optique est déposée sur une surface principale qui s'étend dans un plan transversal par rapport au plan du support d'enregistrements lors de l'utilisation de la tête.

6. Appareil de lecture optique de supports d'enregistrement magnétique qui comportent des pistes de moins de 15 micromètres de large et ayant un pas d'espacement inférieur à 15 microns, l'appareil étant caractérisé en ce qu'il comporte une tête de lecture selon l'une des revendications précédentes, des moyens pour faire défiler le support dans un plan parallèle à l'entrefer étroit et dans une direction transversale par rapport à ladite direction générale de l'entrefer, et des moyens optoélectroniques pour détecter séparément les variations de modulation du faisceau dues au défilement de chaque piste du support d'enregistrement devant la tête de lecture.

7. Appareil de lecture selon la revendication 6, caractérisé en ce que le faisceau lumineux modulé par la couche magnéto-optique continue est dirigé sur un détecteur photosensible linéaire à plusieurs capteurs photosensibles élémentaires (24), une image de cette modulation étant formée sur le détecteur de manière qu'à chaque piste de la bande magnétique corresponde un ou plusieurs capteurs respectifs.

## Patentansprüche

1. Lesekopf zum Auslesen von auf einem magnetischen Aufzeichnungsträger (20) verlaufenden parallelen Magnetspuren, deren Abstand geringer als etwa 15 µm ist, wobei dieser Kopf hierzu einen magneto-optischen Transduktor (18) mit einer dünnen magneto-optischen Schicht (32), in deren Nähe der magnetische Aufzeichnungsträger vorbeilaufen kann, sowie einen schmalen linearen Magnetspalt (34') enthält, der dieser dünnen Schicht benachbart ist, allgemein parallel zur Ebene des Aufzeichnungsträgers und quer zu dessen Laufrichtung verläuft, wobei die magneto-optische Schicht (32) sich kontinuierlich entlang des linearen Magnetspalts über eine Breite entsprechend einer großen Zahl von parallelen Magnetspuren erstreckt und Mittel (10, 14, 16) vorgesehen sind, um einen Lichtstrahl auf diese Schicht entlang einer Linie (52) parallel zum Magnetspalt (34') und in unmittelbarer Nähe dieses Spalts zu richten, dadurch gekennzeichnet, daß die magneto-optische Schicht magnetisch anisotrop ist und eine Achse leichter Magnetisierung parallel zum schmalen linearen Magnetspalt aufweist.

2. Lesekopf nach Anspruch 1, dadurch gekennzeichnet, daß der Lichtstrahl auf die magneto-optische Schicht in einem Abstand unter etwa 10 bis 15 µm vom Rand der Schicht konzentriert ist, vor dem der auszulesende magnetische Aufzeichnungsträger vorbeilaufen kann.

3. Lesekopf nach einem der Ansprüche 1 und 2, dadurch gekennzeichnet, daß der Lichtstrahl auf die magneto-optische Schicht durch eine Zylinderlinse fokussiert ist.

4. Lesekopf nach einem der vorstehenden Ansprüche, dadurch gekennzeichnet, daß die magneto-optische Schicht auf eine Hauptseite des Kopfes aufgebracht ist, die parallel zur Ebene des Aufzeichnungsträgers während der Nutzung des Kopfes verläuft.

5. Lesekopf nach einem der Ansprüche 1 bis 3, dadurch gekennzeichnet, daß die magneto-optische Schicht auf eine Hauptseite aufgebracht ist, die sich in einer Ebene quer bezüglich der Ebene des Aufzeichnungsträgers bei Nutzung des Kopfes erstreckt.

6. Optisches Lesegerät für magnetische Aufzeichnungsträger, die Spuren einer Breite von unter 15 µm und einem Abstand von unter 15 µm besitzen, dadurch gekennzeichnet, daß es einen Lesekopf gemäß einem dem vorstehenden Ansprüche, Mittel, um den Aufzeichnungsträger in einer Ebene parallel zum schmalen Magnetspalt und in einer Richtung quer bezüglich der allgemeinen Richtung des Magnetspalts durchlaufen zu lassen, und optoelektronische Mittel aufweist, um getrennt die Veränderungen der Modulation des Strahls aufgrund des Durchlaufs jeder Spur der Aufzeichnungsträgers vor dem Magnetkopf zu erfassen.

7. Lesegerät nach Anspruch 6, dadurch gekennzeichnet, daß der von der kontinuierlichen magneto-optischen Schicht modulierte Lichtstrahl auf einen linearen lichtempfindlichen Detektor mit mehreren lichtempfindlichen Elementarsonden (24) gerichtet wird, wobei ein Bild dieser Modulation auf dem Detektor gebildet wird, derart, daß jeder Spur des Magnetbands eine oder mehrere Sonden entsprechen.

## Claims

1. Read head intended for reading, on a magnetic recording medium (20), parallel magnetic tracks which are arranged at a spacing of less than around 15 micrometres, this head comprising for this purpose a magneto-optic transducer (18) comprising a thin magneto-optic layer (32) close to which the magnetic medium can travel, and a narrow linear gap (34') adjacent to this thin layer, with general direction parallel to the plane of the medium and transverse to its direction of travel, the magneto-optic layer (32) extending continuously along the linear gap over a width corresponding to a large number of parallel magnetic tracks, and means (10, 14, 16) being provided in order to direct a light beam onto this layer along a line (52) parallel to the gap (34') and very close thereto, characterized in that the magneto-optic layer is magnetically anisotropic and exhibits an axis of easy magnetization parallel to the narrow linear gap.

2. Read head according to Claim 1, characterized in that the light beam is concentrated onto the magneto-optic layer at a distance of less than around 10 to 15 micrometres from that edge of the layer past which the magnetic medium to be read can travel.

3. Read head according to either of Claims 1 and 2, characterized in that the light beam is focused onto the magneto-optic layer by a cylindrical lens.

4. Read head according to one of the preceding claims, characterized in that the magneto-optic layer is deposited on a main surface of the head which is parallel to the plane of the recording medium when the head is being used.

5. Read head according to one of Claims 1 to 3, characterized in that the magneto-optic layer is deposited on a main surface which extends in a transverse plane with respect to the plane of the recording medium when the head is being used.

6. Apparatus for the optical reading of magnetic recording media which comprise tracks less than 15 micrometres wide and having a pitch spacing of less than 15 microns, the apparatus being characterized in that it comprises a read head according to one of the preceding claims, means for making the medium travel in a plane parallel to the narrow gap and in a transverse direction with respect to the said general direction of the gap, and optoelectronic means for separately detecting the variations in the modulation of the beam which are due to the travelling of each track of the recording medium past the read head.

7. Reading apparatus according to Claim 6, characterized in that the light beam modulated by the continuous magneto-optic layer is directed onto a linear photosensitive detector with several elementary photosensitive sensors (24), an image of this modulation being formed on the detector in such a way that to each track of the magnetic tape there corresponds one or more respective sensors.
